# EUROPEAN PATENT APPLICATION

(11) **EP 2 573 900 A1**
(43) Date of publication of application: **27.03.2013**
(21) Application number: 11182360.5
(22) Date of filing: 22.09.2011
(51) Int. Cl.: H02J 7/00, H02J 7/02

(54) **Portable charger for electronic devices and corresponding charging method**

(71) Applicant: Da Ros, Daniele, 6593 Cadenazzo (TI) (CH); Geiger, Bastian, 1205 Genève (CH); Tamborini, Giuseppe, 21029 Vergiate (VA) (IT); Agustoni, Omar, 1227 Carouge (Genève) (CH)
(72) Inventor: The designation of the inventor has not yet been filed
(74) Representative: Botti, Mario

(57) **Abstract**

The invention relates to a portable charger for electronic devices (2) and to a corresponding charging method for recharging a DC battery (B2) of a portable electronic device (2) by means of a portable charger (3). The portable charger has a seat (5) for hosting at least a portion of said portable electronic device (2) and a source battery (B1) and a first coil (L1) of a transformer (6) are hosted in said portable charger (3). A secondary coil (L2) of the transformer (6) is hosted inside the portable electronic device (2) so that the first and secondary coils (L1, L2) being contactless coupled to charge said DC battery (B2) through the charge of said source battery (B1} when the portable electronic device (2) is hosted on the portable charger (3).

## Description

### Field of the Invention

The present invention relates in its more general aspect to a method for recharging a DC battery of a portable electronic device by means of a portable charger.

More specifically, the invention related to a kit including at least a portable electronic device supplied by a DC battery and a charger for said portable electronic device.

With the term "portable electronic device" we will refer to any kind of carry-on electronic device supplied by an on board DC battery, such as for instance: a mobile phone, a cordless phones, a laptop, a portable media player, a palm computer or a notebook, an e-book device, but also an electronic cigarette, cigar or pipe or any other kind of handheld devices.

### Prior Art

As it is well known in this technical field, any portable electronic device supplied by an on-board DC battery needs to be recharged after few hours of activities or even after few hours in an active stand-by condition.

The duration of the battery supply depends on the kind of electronic device and on the corresponding consumption rate.

For instance, a notebook supplied by the most modern lithium batteries may be active for five or six hours in normal operating conditions while a mobile phone may be kept in a turned on steady state for more than 36 or 48 hours.

Many known electronic devices include firmware or software allowing to put the device in a so-called energy saving state to reduce the power consumption when in a stand-by or inactive state while being kept in a turned on state.

In any case, the battery supplying each electronic device must be recharged sooner or later.

Each manufacturer normally provides its portable electronic device with a corresponding recharger. Those rechargers are different in size, configuration and weight but they all include a transformer that has an input side connected to the public electric supply network through an electric plug and a wire and an output side that may be connected to the portable electric device through a wire and a specific connector.

Each manufacturer has its own connector and one of the most current discussion is just the missing of a standardization among the different plug-in connectors for the portable electric devices.

This missing standardization has some obvious drawbacks due to the fact that each portable electric device has its own recharger and there is the need to bring these rechargers when travelling or when commuting.

Another drawback comes out when travelling abroad since the public electric supply network has different standards in different Countries and this involves the need of having different plugs and adaptors for the different frequencies.

The aim of the present invention is that of providing a completely different method for recharging a DC battery of a portable electronic device by means of a portable charger.

Another aim of the invention is that of avoiding the need of different chargers for different portable electronic devices, at least those produced by the same manufacturer.

A further aim of the present invention is that of allowing an extension of the lifetime of the DC battery incorporated into the portable electronic device.

### Summary of the Invention

The inventive idea at the basis of the present invention is that of providing a recharging method and a recharging kit based on contactless power transmission between the charger and the battery of the portable electronic device.

In other words, the charging phase is obtained with no galvanic contacts.

According to this inventive idea a first embodiment of the invention relates to a method for recharging a DC battery of a portable electronic device by means of a portable charger including a seat for hosting said portable electronic device and characterised in that a source battery and a first coil of a transformer are hosted in said portable charger while a secondary coil of said transformer is hosted in said portable electronic device, said first and secondary coils being contactless coupled to charge said DC battery through the charge of said source battery when the portable electronic device is hosted on the portable charger.

The source battery of the portable charger is inserted in a circuit mesh with said first coil and a switch driven by an oscillator.

Moreover, charge level of said DC battery is checked by a comparator before enabling the electromagnetic coupling between said first and secondary coils.

Upper and lower threshold values of said comparator are set to define the upper and lower level of charge for the DC battery.

The invention further relates to a kit for recharging the DC battery of a portable electronic device, including at least said portable electronic device and a portable charger, characterised by comprising an electric transformer divided in two portions with a first coil hosted in said portable charger and with the secondary coil hosted in said portable electronic device, a seat in said portable charger for hosting the portable electronic device, said first and secondary coils being contactless coupled when the portable electronic device is hosted on the portable charger.

The above kit includes at least:
- a DC battery in said portable electronic device;
- a main battery in said charger;
- the first coil of said transformer being incorporated into the portable charger in the proximity of said seat;
- the secondary coil of said transformer bring incorporated into said portable electronic device in the proximity of a portion coupled to said seat.

Advantageously, said portable electronic device is an electronic cigarette.

Moreover, said source battery of the portable charger is inserted in a circuit mesh with said first coil and a switch driven by an oscillator.

The portable device includes a switching unit and charge controller unit between the secondary coil and the DC battery, so that the charge level of said DC battery is checked by a comparator inside the charge controller unit before enabling the flow of current from said secondary coil.

Further features and advantages of the method and kit of the present invention will appear from the following description given by way of non limiting example with reference to the enclosed drawings.

### Brief description of the drawings

- Figure 1 is a perspective schematic view of a kit of parts including a portable electronic device and a portable charger according to the present invention;
- Figure 2 is a diagram showing the main internal components of the kit of parts shown in Figure 1;
- Figure 3 is schematic and more detailed view of the portable electronic device of the present invention;
- Figure 4 is schematic and more detailed view of the portable charger of the present invention;
- Figure 5 is a perspective schematic view of an alternative kit of parts including a portable electronic device and a portable charger according to the present invention.

### Detailed description

With reference to such a figures, with 1 it is globally and schematically shown a kit of parts including a portable electronic device 2 and a portable charger 3 according to the present invention.

The portable electronic device 2 may be any kind of carry-on electronic device supplied by an on board DC battery, such as for instance: a mobile phone, a cordless phones, a laptop, a portable media player, a palm computer or a notebook, an e-book device, but also an electronic cigarette, cigar or pipe or any other kind of handheld devices.

Just with the purpose of disclosing completely the present invention we will make reference hereinafter to an electronic cigarette 10 as non limiting example of a portable electronic device 2; so the following description will be done with reference to an electronic cigarette with the only purpose of simplifying the invention disclosure.

An electronic cigarette is an electrical device that simulates the act of tobacco smoking by producing an inhaled mist bearing the physical sensation, appearance, and often the flavor and nicotine content of inhaled tobacco smoke while avoiding risks for the health. The device uses heat, or in some cases ultrasonic means, to vaporize a propylene glycol- or glycerin-based liquid solution into an aerosol mist, similar to the way a nebulizer or humidifier vaporizes solutions for inhalation.

The electronic cigarettes are portable and are designed to resemble actual cigarettes or cigars.

Modern electronic cigarettes share at least three essential components:
- a cartridge similar to a conventional cigarette and including a small reservoir holding the liquid that shall be vaporized;
- an atomizer that is the heating element responsible for vaporizing the liquid;
- a power supply including a battery.

Other electronic components necessary for operation are housed within the power unit.

In our example the electronic cigarette 10 includes a small battery B2 that must be recharged periodically.

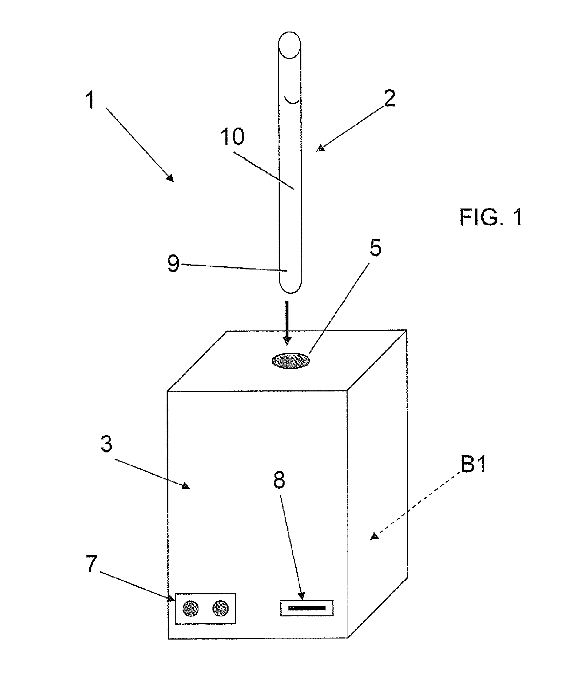

The portable charger 3 of the present invention includes a seat 5 for hosting the portable electronic device; in Figure 1 this seat is a hole opening giving access to a cylindrical recess for hosting the electronic cigarette 2 inserted axially.

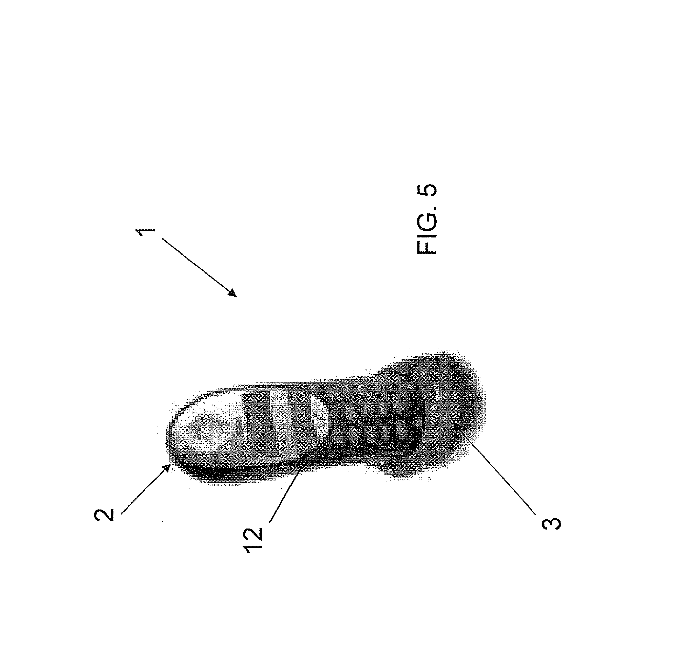

In Figure 5 it is shown an alternative example of a kit of parts 1 according to the present invention and including a mobile or cordless phone 12 as portable electronic device 2 and a portable charger 3 shaped as a base for hosting the mobile phone in a corresponding seat during the recharging period.

Advantageously, according to the invention, a first coil L1 of a electric transformer 6 is incorporated into said charger 3 with windings located very close to said seat 5.

A second coil L2 of the electric transformer 6 is incorporated into said portable electronic device 2 with windings located in a portion 9 of the device 2 that is hosted in the proximity of said seat 5 when the portable device 2 is hosted in its charger 3.

In other words, the electric transformer 6 is divided in two portions with the first coil L1 hosted in said portable charger 3 and with the secondary coil L2 hosted in the portable electronic device 2.

Therefore, the kit 1 for recharging the DC battery B2 of the portable electronic device 2 includes at least:
- the portable electronic device 2 supplied by the DC battery B2;
- the portable charger 3 comprising the seat 5 for hosting at least a portion of the portable electronic device 2;
- a main or source battery B 1 in said charger 3;
- a first coil L1 of a transformer 6 incorporated into the portable charger 3 and connected to said main charger battery B 1;
- a second coil L2 of said transformer 6 is incorporated into said portable electronic device 2 and connected to said DC battery B2. The coils L1. and L2 are coupled when the portable electronic device is hosted on the portable charger 3.

The source battery B 1 has a capacity greater than the capacity of the Dc battery B2 incorporated into the portable device 2.

Let's now consider in more details the components of the kit 1 of parts of the present invention.

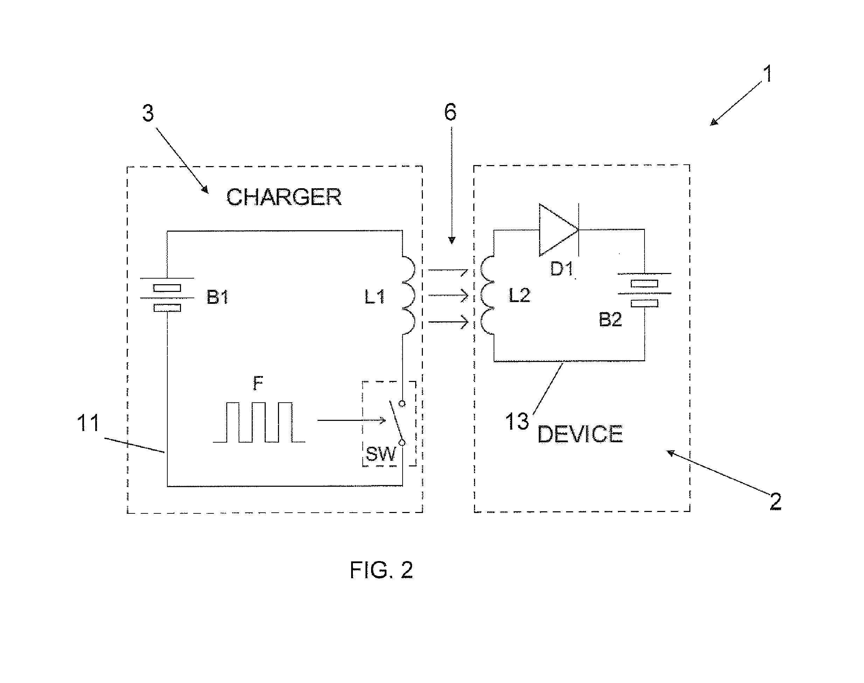

In Figure 2 it is shown a diagram with the main components of the portable device 2 and the portable charger 3 establishing a contactless power transmission.

L1 and L2 are independent coils that may be considered part of a transformer 6 when they are coupled one close to the other.

So, if they are placed close enough to each other, the two coils L1-L2 work as a transformer with L1 being the primary coil and L2 being the secondary coil.

The coil L1 is part of a first mesh circuit 11 incorporated in the portable charger 3 and including also the main or source battery B1 of the portable charger and a switch SW. The switch is driven by the signal of an oscillator O1.

The coil L2 is part of a mesh circuit 13 incorporated in the portable device 2 and including also the on-board DC battery B2 (Device battery) and a protection diode D1.

The DC battery B2 is charged up from the main or source battery B 1 through the contactless coupling between the coils L1 and L2 of the provisional transformer 6.

The contactless power transmission method of the present invention has at least the following advantages:
- ease of use, since there is no need to look for fitting and plugging-in often small and complicated connectors;
- more reliable, since the recharge is obtained without galvanic contacts which often fails to work;
- increases the working time of the portable device;
- the weight of the portable device can be reduced because a smaller capacity battery B2 may be adopted;
- increases the lifetime of the DC battery B2 since it needs to be changed less often; moreover, the portable be left in the seat 5 of the charger 3 to be charged even if the B2 capacity is dropped drastically since even the charger 3 is portable.

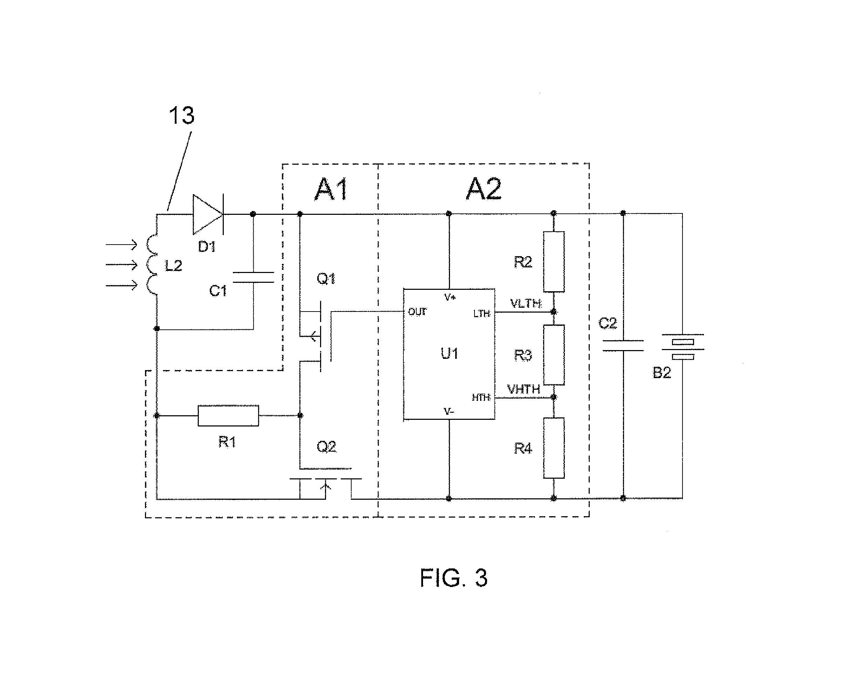

Making now more specific reference to the example of Figure 3, it may be appreciated that the contactless charge pulses coming from the L2 coil cross the diode D1 of the circuit 13 and are accumulate on the capacitor C1.

The DC on board battery B2 is a rechargeable lithium battery and is connected in parallel with a capacitor C2 that is provided just for filtering purposes.

A first circuit block A1 is associated to the circuit 13 as switching unit while a second circuit block A2 is connected between the first circuit block A1 and the DC battery B2 as charge controller. The charge level of said DC battery B2 is checked by a comparator U1 before enabling the electromagnetic coupling between said first and secondary coils L1, L2.

In this respect, inside this charge controller it has been provided an integral circuit U 1 including a comparator with an internal reference and adjustable hysteresis.

This integrator U1 controls the switching unit A1.

A voltage divider including resistors R2, R3 and R4 is connected in parallel to the capacitor C2 for setting the threshold values VLTH and VHTH of the comparator.

Advantageously, the threshold values are set to define the lower level of the DC battery B2, when the circuit should start to charge up the battery B2, as well as to define the upper level of the same battery B2 when the circuit should stop charging.

If the threshold VLTH voltage is minor than the internal reference voltage of the comparator, preferably set to 1.24 V, the comparator output OUT switches to the low level and forces to switch on the NMOS transistor Q2 of the switching unit A1.

The switching unit A1 includes also a resistor R1 and a PMOS transistor Q1 receiving the output OUT of the comparator and acting on the other transistor Q2.

When the transistor Q2 is in the switched on position, the battery B2 starts to charge up, as long as the increasing VHTH voltage reaches the U1 internal reference voltage.

At that point, the comparator U1 output OUT switches to the to the high level and turns off the switching unit A1.

Preferably, the battery B2 is charged when the threshold value VHTH is 3.7 V and stops at 4.2 V.

It should be noted that the supply current of the whole circuitry is very low (about 3 pA) usually much less than the self discharge of any kind of rechargeable battery.

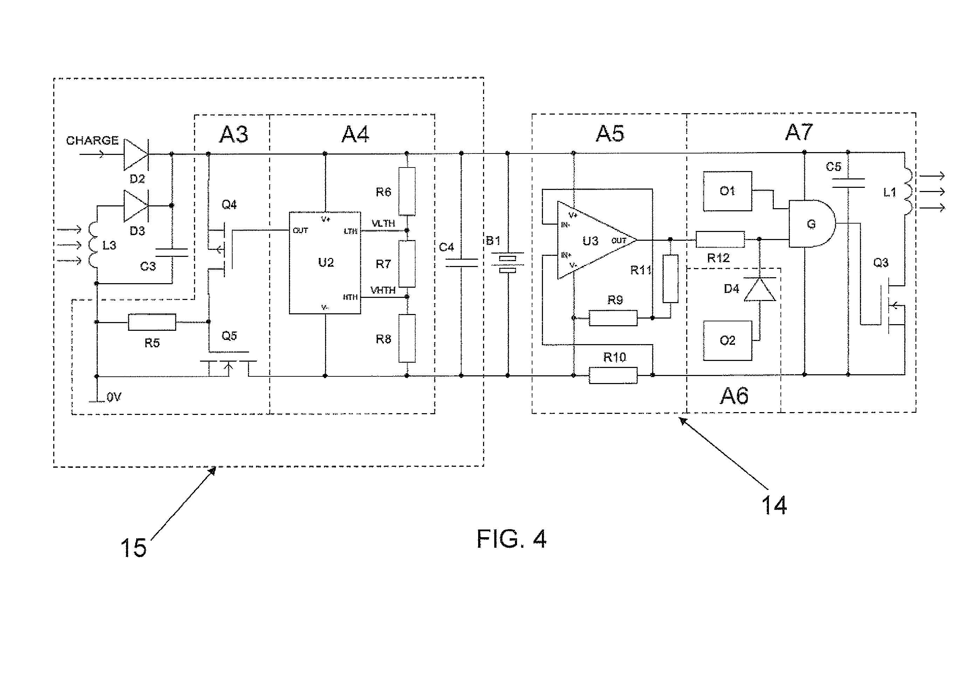

In Figure 4 there is diagram of the internal structure of the portable charger 3. As shown in Figures 1 and 3, the charger 3 is an holder box capable of hosting the portable electronic device 2 and having a plug 7 for the insertion of a connector for connecting to the electric power supply network or an alternative USB port for connecting to a possible source of DC electric power supply.

The portable charger 3 includes the main or source battery B1 providing the power for contactless charging of the DC battery B2.

The charger 3 includes two main circuit portions 14 and 15.

The circuit portion 14 is the charging portion and connects the battery B 1 with the coil L1.

This circuit portion 14 comprises essentially three blocks: A5 as a current monitor unit, A6 as a wake up unit and A7 as a charging unit.

Looking first at the charging unit A7, the NMOS transistor Q3 injects current pulses into the primary coil L1 and, if the portable device 2 is placed into the seat 5 of the charger 3, the injected current pulses are inducing electric pulses in the coupled secondary coil L2.

The transistor Q3 corresponds substantially to the switch SW and is driven by an oscillator O1 via the an AND gate G.

This oscillator O1 is practically a square wave generator and its output is schematically shown also in Figure 2 through the square wave signal driving the switch SW with the frequency F.

The frequency F is of some hundred kHz. The AND gate G is activated by the current monitor block A5.

When the portable charger is charging the battery B2 of the portable device 2, the L1-L2 coupling of the transformer 6 is loaded and the current consumption becomes higher on the charging unit A7. The current consumption is monitored through the R10 resistor and the voltage drop on this resistor R10 is amplified by the A3 amplifier of the monitor block A5.

The output voltage of this amplifier A3 is proportional to the current consumption. During the charging mode, the amplifier A3 output voltage is high enough to activate the AND gate G and the oscillator O1 can drive the output transistor Q3.

When the portable device 2 is not placed into the charger 3 (or when the B2 battery is already charged up) the switching unit A1 is in an off position.

In this case the current consumption is much less and the voltage drop on the resistor R10 is not enough to activate the AND gate G. Therefore, the charger enters a stand-by mode and the supply current drops to very low level.

The block A6 is specifically provided for waking up the charger 3.

A second oscillator 02 is provided in such a wake up unit A6 with a very low frequency (0.05 - 0.1. Hz) and by a pulse generator with 200-300 ps pulse width. During this short interval of time the AND gate G is activated via the diode D4 to check the charge conditions. If the battery B2 requires a charging phase, then the L1-L2 coils of the transformer 6 are enabled to be loaded and the voltage drop on the sense resistor R10 is high enough to keep the charging mode on. If the battery B2 is already charged, the charger 3 remains in the standby mode.

The other circuit portion 15 shown in Figure 4 has a structure substantially similar to the circuit portion incorporated into the portable device 2 and we will avoid its detailed description for reducing the length of the present disclosure.

As a matter of fact the portions A3 and A4 structurally corresponds to the circuit portions A1 and A2. Just the physical components may have different resistance, capacity or current gain values.

So the main or source battery B1 is connected in parallel with a capacitor C4 corresponding to the capacitor C2. The block A3 is a switching unit like the block A1 while the block A4 is a charge controller like the block A2.

The charging can be managed by the contactless method of the invention using a coupled coil L3 inserted in a circuit comprising a capacitor C3 and the diode D3.

As an alternative, the power supply is fed through the diode D2 from a wired power source.

The total supply current of the Figure 4 circuitry in the standby mode (including the wake up function) is very low (about 6 µA), much less than the self discharge of the source battery B1.

Just to summarize the advantages of the present invention, it should be noted that this invention relates to a rechargeable and portable electronic device 2 like an electronic cigarette, cigar or pipe or other handheld device like mobile phone, mobile computer, etcetera, wherein the on board battery is recharged by a contactless method.

After the use of the device, it may be placed into the corresponding seat of the holder charger 3 box without any galvanic contact and the battery B2 of the device 2 is recharged by induced current using inductive coupling.

As an alternative, a capacitive or optical coupling or other wireless coupling may be provided.

The is connected to a wired energy source.

The source battery B1 of the holder charger 3 box is also rechargeable and charged up with wired energy source through the plug 7 or the USB port 8 and so connected to a car plug, an AC/DC adapter, to solar cells, etcetera. As an alternative, even the source battery B1 may be charged with a contactless method like the one used above for charging up the DC battery B2 of the portable device 2.

## Claims

1. A method for recharging a DC battery (B2) of a portable electronic device (2) by means of a portable charger (3), wherein the portable charger has a seat (5) for hosting at least a portion of said portable electronic device (2), **characterised in that** a source battery (B1) and a first coil (L1) of a transformer (6) are hosted in said portable charger (3) while a secondary coil (L2) of said transformer (6) is hosted in said portable electronic device (2), said first and secondary coils (L1, L2) being contactless coupled to charge said DC battery (B2) through the charge of said source battery (B1) when the portable electronic device (2) is hosted on the portable charger (3).

2. Method according to claim 1, wherein said source battery (B1) of the portable charger (3) is inserted in a circuit mesh with said first coil (L1) and a switch (SW) driven by an oscillator (O1).

3. Method according to claim 1, wherein the charge level of said DC battery (B2) is checked by a comparator (U1) before enabling the electromagnetic coupling between said first and secondary coils (L1, L2).

4. Method according to claim 1, wherein upper and lower threshold values of said comparator (U1) are set to define the upper and lower level of charge for the DC battery (B2).

5. Method according to claim 1, wherein said source battery (B1) of the portable charger is charged through a contactless coupling.

6. Method according to claim 1, wherein the capacity of said source battery (B1) is greater than the capacity of said DC battery (B2).

7. A kit for recharging the DC battery (B2) of a portable electronic device (2), including at least said portable electronic device (2) and a portable charger (3), **characterised by** comprising an electric transformer (6) divided in two portions with a first coil (L1) hosted in said portable charger (3) and with the secondary coil (L2) hosted in said portable electronic device (2), a seat in said portable charger for hosting the portable electronic device (2), said first and secondary coils (L1, L2) being contactless coupled when the portable electronic device (2) is hosted on the portable charger (3).

8. A kit according to claim 7 and including at least:
- a DC battery (B2) in said portable electronic device (2);
- a main battery (B2) in said charger (3);
- the first coil (L1) of said transformer (6) being incorporated into the portable charger (3) in the proximity of said seat (5);
- the secondary coil (L2) of said transformer (6) bring incorporated into said portable electronic device (2) in the proximity of a portion (9) coupled to said seat (5).

9. A kit according to claim 7 wherein said portable electronic device (2) is an electronic cigarette (10).

10. A kit according to claim 7 wherein said source battery (B1) of the portable charger (3) is inserted in a circuit mesh with said first coil (L1) and a switch (SW) driven by an oscillator (O1).

11. A kit according to claim 10 wherein said portable device (2) includes a switching unit (A1) and charge controller unit (A2) between the secondary coil (L2) and the DC battery (B2), so that the charge level of said DC battery (B2) is checked by a comparator (U1) inside the charge controller unit (A2) before enabling the flow of current from said secondary coil (L2).

12. A kit according to claim 7 wherein the capacity of said source battery (B1) is greater than the capacity of said DC battery (B2).

13. A kit according to claim 8 wherein said charger (3) includes two main circuit portions (14, 15), a first charging portion (14) connecting said main or source battery (B1) with said first coil (L1) and a second portion (15) including a switching unit (A3) and a charge controller (A4) connected to said source battery (B1).

14. A kit according to claim 13 wherein said first charging circuit portion (14) comprises essentially three blocks, a current monitor unit (A5), a wake up unit (A6) and a charging unit (A7) connected to the first coil (L1).

15. A kit according to claim 13 wherein said second circuit portion (15) structurally corresponds to a circuit portion incorporated in said portable device (2) including a switching unit (A1) and a charge controller (A2) connected to said DC battery (82).
